# EUROPEAN PATENT SPECIFICATION

(11) **EP 0 554 448 B1**
(45) Date of publication and mention of the grant of the patent: **09.10.1996**
(21) Application number: 91910860.5
(22) Date of filing: 19.06.1991
(51) Int. Cl.: B60R 21/20

(54) **COVER FOR RECEIVING AIR BAG**
DECKEL ZUR AUFNAHME EINES LUFTSACKS
COUVERCLE DESTINE A RECEVOIR UN COUSSINET PNEUMATIQUE DE SECURITE

(30) Priority: 20.06.1990 JP 161797/90
(43) Date of publication of application: 11.08.1993
(73) Proprietor: TAKATA CORPORATION, Minato-ku, Tokyo 106 (JP)
(72) Inventor: ZUSHI, Takayasu, Hikone-shi, Shiga 522 (JP)
(74) Representative: Goddard, David John
(86) International application number: JP9100820
(87) International publication number: WO9119629

(56) References cited:
- FR-A- 2 652 321
- JP-A-55 003 972
- JP-A-58 076 243
- JP-U- 1 123 562

## Description

The present invention relates to a cover for containing an air bag and particularly, to an air bag cover including marks.

### BACKGROUND ART

An air bag is mounted in an automotive vehicle and inflated and deployed by sensing impact or deformation in the event of a vehicle collision. This air bag is contained in an air bag cover.

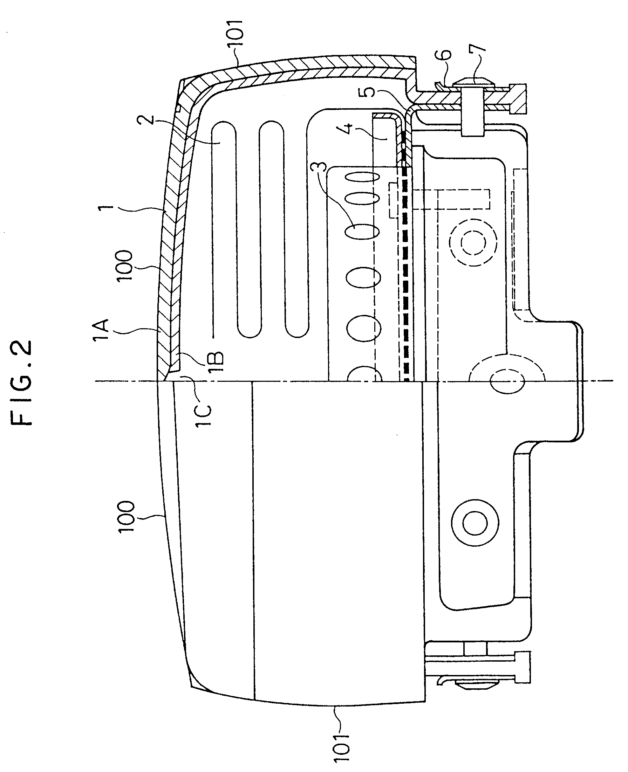

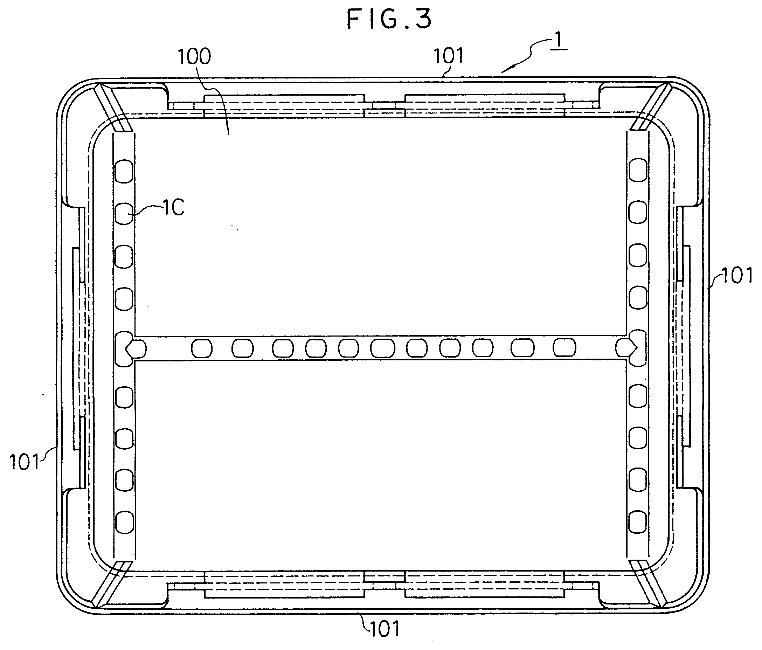

In the drawings shown in Figs 2 and 3, 1 is an air bag cover. 2 is an air bag. 3 is an inflator. 4 is a ring retainer. 5 is a base retainer. 6 is a plate. 7 are rivets.

The air bag cover 1 includes a main plate 100, and a side plate 101 extending from sides of the main plate 100 and is in the form of a shallow box. The cover 1 is generally made of thermoplastic resin and includes an outer layer 1A, and a core layer 1B of resin having a greater rigidity than that of the outer layer 1A. A tear line 1C is formed in the core layer 1B to allow the cover 1 to readily rupture when the air bag is deployed. The tear line 1C is in the form, for example, of a groove or an interrupted slit.

Generally, such an air bag cover is made by an injection molding process. One such injection molding process is referred to as an insert injection molding process. After a core layer has been formed, a molded core layer is fit in a mold. The mold has a cavity. A thermoplastic polymer is injected into the cavity of the mold to form an outer layer. Another process is a two-colour injection molding process (double injection). After a core layer has been formed, a mold is replaced by the new mold without removing a molded core layer from the mold. A suitable material is injected into a cavity of the new mold to form an outer layer. A tear line is formed in the core layer 1B during the injection molding process.

Marks such as symbols or characters are formed on the air bag cover 1, for example, to identify products. Paint is conventionally used to print such marks. As an alternative, the outer layer 1A is partly embossed during a molding process to form raised marks.

Of these conventional processes, the printing process may cause removal of the paint. If this happens, the marks can no longer be identified. Also, as the marks are simply printed on the outer layer, they do not provide a high quality product. In addition, the marks are printed by paint after a cover has been produced. This results in a decrease in the production efficiency.

In the case where embossing is effected to form raised marks on part of the outer layer while it is being molded, no printing process is involved. Also, the raised marks appear to be somewhat of a higher quality. In this case, however, the raised marks are identical in quality and color to the outer layer as they are made of the same resin. Thus, the esthetic appearance and quality of the cover are not satisfactory. Also, when the raised marks are made of the same resin as the outer layer, it is sometimes difficult to identify the marks subject to different types of illumination.

JP-U-1-123562, on which the preamble of claim 1 is based, shows a cover molded in a single resin layer and having a mark incorporated therein, the mark being combined with a reinforcing core member extending throughout the area of the cover.

JP-A-2-171362 shows a cover comprising a core layer and an outer layer. However, no incorporated marks are shown. This document corresponds to figure 2.

### DISCLOSURE OF THE INVENTION

It is an object of the present invention to solve the problems encountered in the prior art and to provide an air bag cover which increases the esthetic appearance and quality of marks, facilitates identification of marks, and prevents removal of marks, and which can be effectively produced.

According to the present invention, there is provided a cover of an air bag assembly, the cover comprising: a resin moulding having a mark incorporated therein; the mark having a main portion and a flange portion extending laterally and outwardly from the main portion at a lower end thereof, the cover being characterised in that said resin moulding comprises a core layer made of a resin material and an outer layer made of a resin material and bonded to an outer surface of the core layer; the mark being connected to the core and outer layers such that the flange portion is located between the outer surface of the core layer and an inner surface of the outer layer, the main portion passing through the outer layer; said mark having a curved outer surface at the upper surface of the main portion, an edge around the curved outer surface and a centre portion in a middle of the curved outer surface, said edge being located in a horizontal level coincident with the outer surface of the outer layer 1A so that the centre portion projects outwardly from said cover.

The marks may be incorporated by a multi-color molding process or an insert molding process.

In the case where marks are made by a multi-color molding process, the marks project from the outer layer. In the case where marks are made by an insert molding process, metal or other inorganic materials, rather than resin, are used to form raised marks on the outer layer.

With the air bag cover of the present invention, the marks are different in quality, color and luster from the outer layer and have good esthetic appearance and high quality. The marks can also be readily identified and are durable.

The marks are formed during a series of injection molding steps and require no further step to increase the production efficiency.

### BRIEF DESCRIPTION OF THE DRAWINGS

Figs 1a and 1b are sectional views illustrating marks formed on an air bag cover made according to one embodiment of the present invention;
Fig.2 is a schematic sectional front view, in part, of the air bag cover attached to an air bag; and
Fig.3 is a rear view of the air bag cover.

### BEST MODE FOR CARRYING OUT THE INVENTION

The present invention will now be described in detail, by way of example, with reference to the drawings.

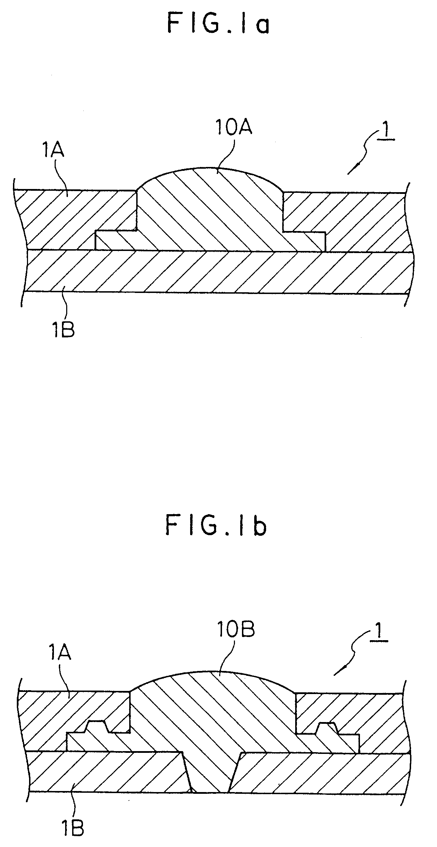

Referring to Fig 1a, an air bag cover 1 includes an outer layer. Marks are made by a multi-color molding process and project from the outer layer 1A. Specifically, a material is first injected into a mold to form a core layer 1B. The mold, rather than the core layer, is then replaced by a new mold. This new mold has a cavity. A suitable material is injected into this cavity to provide marks. Thereafter, the mold, rather than the molded marks, is replaced by another mold. This mold also has a cavity. A material is then injected into this cavity to form an outer layer. The air bag cover of the present invention is made by a three-color molding process.

In the air bag cover shown in Fig. 1a, any resin may be used to form the marks, and such resin may, if necessary, differ in quality, luster and color from that used to form the outer layer 1A.

In the air bag cover shown in Fig. 1b, a mark 10B is made by an insert molding process and projects from the outer layer 1A. Specifically, the mark 10B is fit in a mold. The core layer 1B and the outer layer 1A are then made by a two-color molding process.

In the air bag cover shown in Fig. 1b, metal, glass, ceramic or other inorganic materials may be used to form the marks 10B. Also, resin may be used if it is durable at an injection molding temperature.

According to the present invention, the outer layer and the core layer may be made of any resin or those used in the prior art. A reinforcing net and the like may be inserted.

Also, according to the present invention, the marks may be any kind (character, symbol or design), may have any size, and may be formed in any place. To prevent removal of the mark from the outer layer, the mark is preferably shaped such that the area of the mark embedded in the outer layer (the sectional area of the mark extending in parallel to the surface of the outer layer 1A) is greater than that of the mark projecting form the outer layer 1A as shown in Figs. 1a and 1b.

### INDUSTRIAL APPLICABILITY

As previously described in detail, the present invention provides an air bag cover including marks which have good esthetic appearance and high quality, and which can readily be identified and are durable.

## Claims

1. A cover of an air bag assembly, the cover comprising:
a resin moulding having a mark (10A; 10B) incorporated therein;
the mark having a main portion and a flange portion extending laterally and outwardly from the main portion at a lower end thereof, the cover being characterised in that
said resin moulding comprises a core layer (1B) made of a resin material and an outer layer (1A) made of a resin material and bonded to an outer surface of the core layer; the mark being connected to the core and outer layers such that the flange portion is located between the outer surface of the core layer and an inner surface of the outer layer, the main portion passing through the outer layer;
said mark having a curved outer surface at the upper surface of the main portion, an edge around the curved outer surface and a centre portion in a middle of the curved outer surface, said edge being located in a horizontal level coincident with the outer surface of the outer layer (1A) so that the centre portion projects outwardly from said cover.

2. A cover according to claim 1, further including a projection extending upwardly from a middle part of said flange portion and a projection extending downwardly through the core layer from the lower surface of the main portion.

3. A cover according to claim 2, wherein said mark is made of a resin material

4. A cover according to claim 2, wherein said mark is made of a material selected from the group comprising metal, glass and ceramic.

## Patentansprüche

1. Abdeckung für eine Airbaganordnung, wobei die Abdeckung die folgenden Merkmale aufweist:
einen Formkörper aus Harz, der eine in ihn eingebrachte Markierung (10A; 10B) aufweist;
die Markierung weist einen Hauptabschnitt und einen Flanschabschnitt auf, der sich vom Hauptabschnitt an dessen unterem Ende seitlich und nach außen erstreckt, wobei die Abdeckung dadurch **gekennzeichnet** ist, daß
der Formkörper aus Harz eine Kernschicht (1B) aufweist, die aus Harzmaterial hergestellt ist, und eine Außenschicht (1A), die aus Harzmaterial hergestellt ist und an einer Außenoberfläche der Kernschicht anhaftet; wobei die Markierung mit der Kernschicht und Außenschicht so verbunden ist, daß der Flanschabschnitt zwischen der Außenfläche der Kernschicht und einer Innenfläche der Außenschicht angeordnet ist und der Hauptabschnitt durch die Außenschicht hindurchtritt;
wobei die genannte Markierung eine gekrümmte Außenoberfläche an der oberen Oberfläche des Hauptabschnitts, eine Kante rund um die gekrümmte Außenoberfläche sowie einen Mittelabschnitt in der Mitte der gekrümmten Außenoberfläche aufweist, und wobei die genannte Kante in einem horizontalen Niveau angeordnet ist, das mit der Außenoberfläche der Außenschicht (1A) so zusammenfällt, daß der Mittelabschnitt von der genannten Abdeckung nach außen vorsteht.

2. Abdeckung nach Anspruch 1, ferner mit einem Vorsprung, der sich von einem mittleren Teil des genannten Flanschabschnitts nach oben erstreckt, und einem Vorsprung, der sich durch die Kernschicht von der unteren Oberfläche des Hauptabschnitts aus nach unten erstreckt.

3. Abdeckung nach Anspruch 2, worin die genannte Markierung aus einem Harzmaterial hergestellt ist.

4. Abdeckung nach Anspruch 2, worin die genannte Markierung aus einem Material hergestellt ist, das aus der Gruppe ausgewählt ist, die Metall, Glas und Keramikmaterial umfaßt.

## Revendications

1. Couvercle d'ensemble de coussin gonflable, le couvercle comprenant :
un moulage en résine dans lequel une marque (10A ; 10B) est incorporée ;
la marque ayant une portion principale et une portion rebord qui s'étend latéralement et vers l'extérieur à partir de la portion principale, au niveau de son extrémité inférieure, le couvercle étant caractérisé en ce que ledit moulage en résine comprend une couche d'âme (1B) faite d'une matière de résine et une couche extérieure (1A) faite d'une matière de résine et liée à la surface extérieure de la couche d'âme ; la marque étant liée à la couche d'âme et à la couche extérieure de telle manière que la portion rebord soit située entre la surface extérieure de la couche d'âme et la surface intérieure de la couche extérieure, la portion principale passant à travers la couche extérieure ;
ladite marque ayant une surface extérieure courbe au niveau de la surface supérieure de la portion principale, un bord qui entoure la surface extérieure courbe et une portion centrale au milieu de la surface extérieure courbe, ledit bord étant situé à un niveau horizontal qui coïncide avec la surface extérieure de la couche extérieure 1A de manière que la portion centrale fasse saillie à l'extérieur dudit couvercle.

2. Couvercle selon la revendication 1, comprenant en outre une saillie qui s'étend vers le haut à partir d'une partie centrale de ladite portion rebord et une saillie qui s'étend vers le bas à travers la couche d'âme en partant de la surface inférieure de la portion principale.

3. Couvercle selon la revendication 2, dans lequel ladite marque est faite d'une matière de résine.

4. Couvercle selon la revendication 2, dans lequel ladite marque est faite d'une matière choisie dans le groupe comprenant un métal, le verre et la céramique.
